(19) Europäisches Patentamt
European Patent Office
Office européen des brevets

(11) Veröffentlichungsnummer: **0 033 385**
**B1**

(12) # EUROPÄISCHE PATENTSCHRIFT

(45) Veröffentlichungstag der Patentschrift: **18.01.84**

(51) Int. Cl.³: **C 08 B 9/00**

(21) Anmeldenummer: **80108078.9**

(22) Anmeldetag: **20.12.80**

(54) **Verfahren zur Herstellung von Viskose.**

(30) Priorität: **05.01.80 DE 3000306**

(43) Veröffentlichungstag der Anmeldung: **12.08.81 Patentblatt 81/32**

(45) Bekanntmachung des Hinweises auf die Patenterteilung: **18.01.84 Patentblatt 84/03**

(84) Benannte Vertragsstaaten: **AT DE FR GB NL SE**

(56) Entgegenhaltungen:
**DE-C- 850 002**
**US-A- 2 861 039**

(73) Patentinhaber: **HOECHST AKTIENGESELLSCHAFT**
**Postfach 80 03 20**
**D-6230 Frankfurt am Main 80 (DE)**

(72) Erfinder: **Mayer, Reinhart**
**Veilchenstrasse 25**
**D-8420 Kelheim (DE)**
Erfinder: **Fester, Walter, Dr.**
**Steinweg 13**
**D-6240 Königstein/Taunus (DE)**
Erfinder: **Kleber, Rolf, Dr.**
**Am Trieb 41**
**D-6078 Neu-Isenburg (DE)**

EP 0 033 385 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Verfahren zur Herstellung von Viskose

Die Erfindung betrifft ein Verfahren zur Herstellung von gut filtrierbaren Viskosen aus Hemicellulose haltigen Zellstoffen, bei denen die aktiven Gruppen der Hemicellulose durch Reaktion mit geeigneten Substanzen vor oder während der Alkalisierung vernetzt oder die reaktiven Gruppen wenigstens blockiert werden.

Bei der Herstellung von Fäden, Fasern und Folien aus Regeneratcellulose wird die Spinnlösung des Cellulosexanthogenats in Wasser bzw. verdünnter Natronlauge üblicherweise als Viskose bezeichnet. Derartige Viskosen erhält man nach bekannten Verfahren, in dem Zellstoff mit einem Überschuß an Natronlauge versetzt und die überschüssige Natronlauge abgepreßt wird. Die erhaltene Alkalicellulose wird dann üblicherweise nach einem Zerfasern einem oxidativen Abbau, der sogenannten Vorreife, unterworfen, um dann in geschlossenen Reaktionsgefäßen mit Schwefelkohlenstoff zum Natriumcellulosexanthogenat umgesetzt zu werden. Dieses Xanthogenat ist in verdünnter Natronlauge löslich. Die erhaltene Viskose kann nach entsprechender Filtration, Entgasung und weiterer Lagerung (Nachreife) aus Düsen in ein schwefelsäurehaltiges Koagulierbad versponnen werden. Durch die Einwirkung der Schwefelsäure wird das Xanthogenat aufgespalten. Es werden geformte Gebilde aus Cellulose erhalten, während Schwefelkohlenstoff und der durch Nebenreaktionen entstandene Schwefelwasserstoff gasförmig entweichen.

Als Ausgangsmaterial für die Viskoseherstellung dienen Zellstoffe, die je nach Aufschlußgrad bzw. dem Maß der Veredlung neben der fadenbildenden Cellulose auch 0 bis ca. 12 % in der Alkalisierlauge lösliche Verbindungen enthalten. Derartige in der Alkalisierlauge lösliche Verbindungen werden allgemein als Hemicellulosen bezeichnet. Chemische Untersuchungen haben gezeigt, daß es sich bei diesen Hemicellulosen um ein Gemisch aus einer Vielzahl unterschiedlicher Polysaccharide handelt, die zum Teil nativen Ursprung haben und aus verschiedenen Pentosen und Hexosen aufgebaut sind, zum andern aber auch Abbau produkte der Cellulose mit geringerem Molekulargewicht darstellen (vgl. dazu K. Götze, « Chemiefasern nach dem Viskoseverfahren », 3. Auflage (1967), S. 113-123.

Bei der Alkalisierung der Zellstoffe wird die Hemicellulose herausgelöst, sie reichert sich in der Alkalisierlauge an. Eine derartige Anreicherung führt zu einer Reihe von Nachteilen bei dem Herstellungsprozeß der Viskose.

So wird einmal beobachtet, daß mit zunehmendem Gehalt an Hemicellulose in der Alkalisierlauge die Filtrationseigenschaften der hergestellten Viskose verschlechtert werden. Als Maß für die Filtrationsqualität der Viskose dient die Bestimmung der Verstopfungskonstante bzw. des $K_w$-Werts. Die Definition und die Meßmethode sind beispielsweise in der DE-OS 28 01 820, Seite 7 wiedergegeben. Vergleiche mit der betrieblichen Filtration zeigten, daß die folgende Zuordnung der gemessenen $K_w$-Werte möglich ist.

| $K_w$-Wert | Beurteilung der Filtrierbarkeit |
|---|---|
| < 300 | sehr gut |
| 300-500 | gut |
| 500-800 | erschwert |
| 800-1 000 | schlecht |
| > 1 000 | praktisch nicht mehr filtrierbar |

Wird beispielsweise bei einer Viskose der Zusammensetzung 9,2 % Cellulose, 5,0 % NaOH und 33 % $CS_2$, bezogen auf eingesetzte Cellulose, der Gehalt an Hemicellulose in der Alkalisierlauge variiert, so ergeben sich folgende Zuordnungen

| Gehalt an Hemicellulose in der Alkalisierlauge g/l | $K_w$-Wert der frisch gefertigen Viskose |
|---|---|
| 0 | 422 |
| 17,7 | 555 |
| 31,9 | 760 |
| 52,1 | 2 600 |

Aus diesen Werten ist eindeutig zu entnehmen, daß die Qualität der entstandenen Viskosen mit zunehmendem Gehalt an Hemicellulose in der Alkalisierlauge verschlechtert wird. Man hat versucht, aus diesem Grunde den Gehalt an Hemicellulosen in der Alkalisierlauge möglichst niedrig zu halten. Ein geringer Gehalt an Hemicellulose in der Alkalisierlauge kann durch den Einsatz besonders hochveredelter Zellstoffe erzielt werden. Derartige Zellstoffe weisen nur einen sehr geringen Gehalt an organischen Substanzen auf, die in der Alkalisierlauge löslich sind. Derartige Zellstoffe sind jedoch

erheblich teurer als normale Chemiefaserzellstoffe. Ihr Einsatz beschränkt sich daher auf die Herstellung von Sondertypen. Eine Ausscheidung des Hemicellulosegehaltes aus verbrauchter Alkalisierlauge ist mit Hilfe von Dialysiergeräten möglich. Hierbei tritt neben einem unvermeidbaren Verlust an Alkali eine Belastung des Abwassers auf. Bei Einsatz normaler Chemiefaserzellstoffe werden 6 bis 10 % des eingesetzten Zellstoffs über die Dialyseapparate ausgeschieden. Dieser Umstand bedeutet einen wesentlichen wirtschaftlichen Verlust.

Es ist auch bekannt, durch die Erhöhung des Alkaligehaltes in der Viskose und/oder starke Erhöhung des $CS_2$-Gehaltes eine gut filtrierbare Viskose zu erhalten. Nach Rogowin, « Chemiefasern », VEB Fachbuchverlag Leipzig, 2. Auflage (1960), Seite 224 muß unter diesen Bedingungen der Bedarf an Ätznatron beispielsweise um 0,5 bis 0,8 kg NaOH/Kilo erzeugte Faser erhöht werden. Dieser Wert zeigt, daß eine Dialyse beim Einsatz normaler Zellstoffe mit z. B. 10 % Gehalt an Hemizellulose nur bei erheblich höherem Einsatz an Chemikalien eingespart werden kann.

Als Ursache für die störenden Wirkungen der Hemizellulose beim Viskoseprozeß wurde die sehr schnelle Reaktion der Hemizellulosen mit dem Schwefelkohlenstoff erkannt. Es wurde beobachtet, daß nicht nur die Bildungsreaktion sondern auch die Zersetzungsreaktion derartiger Hemicellulose-Xanthogenate außerordentlich groß ist (vgl. dazu Götze, a.a.O., S. 413-416).

Der Gehalt an Hemicellulose hat auch eine erhebliche Einwirkung auf die Nachreife der Viskose und die Bildung von Nebenprodukten. Beispielsweise konnte gezeigt werden, daß eine 5 %ige Natronlauge nur außerordentlich langsam Schwefelkohlenstoff aufnimmt. Enthält die Lauge jedoch nur 1 g Hemicellulose pro Liter, so ist die Bildungsgeschwindigkeit von Trithiocarbonat bei 20 °C um das 16fache erhöht. Natriumtrithiocarbonat zersetzt sich mit der Schwefelsäure des Spinnbades nach folgender Gleichung

$$Na_2CS_3 + H_2SO_4 \longrightarrow Na_2SO_4 + H_2S + CS_2.$$

Das reine Cellulosexanthogenat zersetzt sich nur unter Freisetzung von Schwefelkohlenstoff. Es ist also möglich, durch eine einfache Zersetzung der Viskose mit Schwefelsäure das Maß der Trithiocarbonatbildung zu bestimmen.

Viskosen, die bereits oben zur Bestimmung des $K_w$-Wertes dienten, wurden unmittelbar nach ihrer Herstellung mit Schwefelsäure zersetzt und die Menge an ausgetriebenem Schwefelkohlenstoff bestimmt. Es wurde folgende Abhängigkeit festgestellt :

| Gehalt an Hemicellulose in der Alkalisierlauge g/l | Ausbeute an $CS_2$ bezogen auf die eingesetzte $CS_2$-Menge % |
|---|---|
| 0 | 92 |
| 17,7 | 87 |
| 31,9 | 84 |
| 52,1 | 79 |

Anhand dieser Beispiele ist deutlich zu sehen, daß die Hemicellulose zu einer starken Verminderung des an die Cellulose gebundenen Schwefelkohlenstoffes in der Viskose führt. Dieser fehlende Schwefelkohlenstoff steht dann zur Sulfidierung der langsamer reagierenden höhermolekularen Celluloseanteile nicht mehr zur Verfügung. Es wird eine schlecht filtrierbare Viskose erhalten.

Es bestand daher immer noch die Aufgabe, ein Verfahren zur Herstellung von Viskose aus hemicellulosehaltigem Zellstoff zu entwickeln, bei dem nach Möglichkeit eine Dialyse der gebrauchten Alkalisierlauge unterbleiben kann, bei dem jedoch die Filtrationswerte der Viskose und der Reifeverlauf nicht durch einen überhöhten Einsatz an Natriumhydroxyd und Schwefelkohlenstoff erkauft werden müssen.

Es wurde nun überraschend gefunden, daß durch Zugabe von Substanzen, die eine Vernetzung oder wenigstens Blockierung der aktiven Gruppen der Hemicellulose bewirken, die nachteiligen Folgen der Anwesenheit von Hemicellulose in der Alkalicellulose und beim Sulfidieren unterbunden werden können. Die höhere Reaktionsgeschwindigkeit der Hemicellulosen mit Schwefelkohlenstoff scheint nicht auf diese Verbindung beschränkt zu sein, sondern allgemein zu gelten. Diese Eigenschaft der Hemicellulosen kann man sich zunutze machen und die reaktiven Gruppen der Hemicellulose blockieren, so daß eine überhöhte Schwefelkohlenstoffaufnahme durch die Hemicellulose unterbunden wird. Die unterschiedliche Reaktionsgeschwindigkeit von Hemicellulosen und Cellulose führt dabei überraschenderweise zu einer weitgehend selektiven Reaktion der Hemicellulose mit den zugesetzten Substanzen, während die Cellulose an den Reaktionen praktisch nicht beteiligt ist. Dies gilt insbesondere, wenn die zugesetzten Mengen der vernetzend oder blockierend wirkenden Substanzen so ausgewählt sind, daß sie etwa nur für die Reaktion mit den aktiven Gruppen der Hemicellulose ausreichen.

Als blockierend wirkende Substanzen eignen sich alle Verbindungen, die bei Raumtemperatur bis leicht erhöhter Temperatur, also etwa im Bereich von 10 bis 60 °C im stark alkalischen Milieu beispielsweise mit den besonders reaktionsfähigen OH-Gruppen der Hemicellulose reagieren können. Um eine vernetzende Wirkung zu erzielen, ist es dabei notwendig; daß die ausgewählten Substanzen

wenigstens zwei reaktive Gruppen aufweisen, die beispielsweise mit den OH-Gruppen der Hemicellulose in Reaktion treten können. Als besonders geeignet haben sich beispielsweise ungesättigte organische Verbindungen herausgestellt, die wenigstens eine aktivierte Doppelbindung oder Dreifachbindung aufweisen. Dabei wird unter einer aktivierten ungesättigten Kohlenstoff — Kohlenstoff — Bindung eine solche verstanden, bei der diese ungesättigte Bindung durch die Nachbarschaft einer polaren Gruppe im Molekül so polarisiert ist, daß sie unter den oben angegebenen Reaktionsbedingungen im stark alkalischen Milieu beispielsweise eine Anlagerung über eine OH-Gruppe der Hemicellulose gestattet. Erfindungsgemäß ist eine lineare Vernetzung der Hemicellulosemoleküle durch die gewählten Zusätze zu bevorzugen, d. h. die zugesetzten Substanzen sollten vorzugsweise zwei aktivierte Doppelbindungen im Molekül aufweisen.

Als Beispiel für besonders geeignete Substanzen seien Sorbinsäure, Maleinsäure, Propargylalkohol aber auch Acrylnitril und Verbindungen genannt, die mit dem Acrylnitril copolymerisierbar sind. Auch diese Verbindungen weisen die geforderte aktivierte Doppelbindung auf.

Als geeignete Substanzen zur Vernetzung bzw. Blockierung der Hemicellulose eignen sich auch organische Halogenverbindungen, bei denen die Reaktivität des Halogenatoms durch polare Nachbargruppen verstärkt wurde. Als Beispiele seien hier aufgeführt: $\alpha$-Dihalogencarbonsäuren wie z. B. Dichloressigsäure, Cyanurchlorid und Sulfonsäurechloride wie z. B. Paraffinpolysulfochlorid. Eine blockierende Wirkung wird z. B. bei Einsatz von Monochloressigsäure beobachtet. Weitere geeignete blockierend wirkende Verbindungen sind beispielsweise auch die Oxyäthylsulfone. Derartige Gruppierungen finden sich z. B. bei den sogenannten Reaktivfarbstoffen.

Der Zusatz der Blockierend bzw. vernetzend wirkenden Substanzen erfolgt vorzugsweise während der Alkalisierung des Zellstoffes durch Zugabe in die Alkalisierlauge. Es ist jedoch möglich, die gewünschte Reaktion bereits vor der Alkalisierung, beispielsweise bei der Zellstoffherstellung, durchzuführen. Bei einer Mehrstufenalkalisierung beispielsweise vor und nach der Vorreife, kann es ggf. von Vorteil sein, die Zusätze nur in einer dieser Stufen einzusetzen.

Die Menge an Zusatzstoff richtet sich weitgehend nach dem Hemizellulosegehalt des eingesetzten Zellstoffs. Allgemein haben sich Zusätze in Mengen von 0,01 bis 5 g/l in der Alkalisierlauge bewährt, bevorzugt wird ein Bereich von 0.05 bis 0.3 g/l. Zur weiteren Verdeutlichung der Erfindung sollen die nachfolgend beschriebenen Beispiele dienen. Falls nicht anders angegeben, beziehen sich Mengen und Prozentangaben auf Gewichte. Zum Teil wurde auf spezielle Hinweise über die angewandten Analysenmethoden verzichtet, da diese beispielsweise in der zitierten Monographie von Götze, a.a.O., Band 2, Kapitel 42 und 43 eingehend beschrieben worden sind.

Beispiel 1 (Vergleich)

Als Ausgangsmaterial für eine Reihe von Versuchen diente ein Buchensulfitzellstoff mit einem $\alpha$-Cellulosegehalt von 90 %, der ohne Laugenabstoß kontinuierlich mit einer Natronlauge von 230 g NaOH/l alkalisiert wurde, wobei lediglich die NaOH-Verluste durch Aufstärken der jeweils erhaltenen Rücklauge mit Ätznatron vorgenommen wurden. Je nach dem Abpreßgrad stellt sich dabei ein Gehalt an Hemicellulose von 50-56 g Hemicellulose/Liter in der Alkalisierlauge ein. Die so erhaltene Alkalicellulose wurde in üblicher Weise vorgereift, sulfidiert und gelöst zu einer Viskose der Zusammensetzung 9,2 % Cellulose, 5,0 % NaOH und 33 % $CS_2$, bezogen auf eingesetzte Cellulose. Bei Reihenversuchen wurde festgestellt, daß unter diesen Bedingungen die Filtrierbarkeit dieser Viskosen außerordentlich schlecht ist, die $K_w$-Werte lagen zwischen 2 100 und 2 800. Die Viskosität der Viskosen betrug im Durchschnitt 40 Kugelfallsec.

Beispiel 2

Die Versuche gemäß Beispiel 1 wurden wiederholt, wobei jedoch die Alkalisierlauge einen Zusatz von 0,1 g/l Sorbinsäure enthielt. Die Alkalicellulose wurde in gleicher Weise wie im Beispiel 1 zu Viskosen verarbeitet, die eine wesentlich bessere Filtration zeigten. Gemessen wurden $K_w$-Werte zwischen 360 und 420. Zersetzt man die frische Viskose, die mit 52,1 g Hemicellulose pro Liter Alkalisierlauge hergestellt worden war, so wurde eine Schwefelkohlenstoffausbeute von 88 % bezogen auf den Schwefelkohlenstoffeinsatz gefunden (Mittel aus 3 Bestimmungen).

Durch den Zusatz der ungesättigten Verbindung wurde also eine Viskose erhalten, die Eigenschaften aufweist als ob sie mit praktisch hemicellulosefreier Lauge hergestellt worden wäre. Durch den Zusatz von geringen Mengen Sorbinsäure ist es möglich, die Dialyse der verbrauchten Alkalisierlauge wegfallen zu lassen. Gleichzeitig wird eine Erhöhung der Schwefelkohlenstoffrückgewinnung und auch der Celluloseausbeute der aus dieser Viskose hergestellten geformten Gebilde beobachtet.

Beispiel 3 (Vergleich)

Ein handelsüblicher Buchensulfitzellstoff mit einem $\alpha$-Cellulosegehalt von 90,8 % und einem Durchschnittspolymerisationsgrad von 780 wurde in einer Tauchpresse der Firma Blaschke, Endersbach mit

einer Lauge behandelt, die 230 g NaOH/l und 52,4 g Hemicellulose/l enthielt. Der Gehalt an Hemicellulose in der Alkalisierlauge wurde durch achtmaliges Tauchen und Abpressen von Blättern des gleichen Zellstofftyps sowie Aufstärken der jeweiligen Rücklauge mit Ätznatron erhalten. Die Alkalicellulose enthielt 32,4 % Cellulose und 16,1 % NaOH. Nach kurzer Zerfaserung erfolgte eine Vorreife für 8 Stunden bei 45 °C. Dabei sank der Durchschnittspolymerisationsgrad auf 270 ab. Die Bestimmung der Durchschnittspolymerisationswerte erfolgte jeweils nach Jayme-Wellm, Das Papier 11 (1957), S. 78 ff. Die anschließende Sulfidierung wurde in evakuierten Metallbehältern bei einer Schwefelkohlenstoffzugabe von 33 %, bezogen auf die eingesetzte Cellulose, durchgeführt. Die Reaktionszeit betrug 90 Min. bei 30 °C. Das erhaltene Xanthogenat wurde anschließend durch Zugabe von 10 %iger Natronlauge und Wasser mit Hilfe eines Flügelrührers zu einer Viskose mit 9,2 % Cellulose und 5,0 % NaOH gelöst. Dreifachbestimmungen der Filterverstopfungskonstante ergaben einen $K_w$-Wert von 2 600.

Beispiel 4

Die Herstellung von Viskose gemäß Beispiel 3 wurde wiederholt, wobei jetzt zur Alkalisierlauge zusätzlich 0,05 g Sorbinsäure/l zugegeben wurden. Die erhaltene Viskose zeigte einen $K_w$-Wert von 420 (Mittel aus 3 Bestimmungen).

Beispiel 5

Der Ansatz gemäß Beispiel 3 wurde wiederholt. Als Zusatzstoff jedoch 0,05 g eines n-Paraffinpolysulfochlorids/l zugegeben. Dieses Polysulfochlorid war durch Umsetzung von $SO_2$ und Chlor mit einem n-Paraffin unter Lichteinwirkung hergestellt worden. Zum Einsatz gelangte ein Paraffinöl (Kp ; 360 °C), das bis zu einem Chlorgehalt von 16 % sulfochloriert wurde.

Die erhaltene Viskose zeigte im Mittel einen $K_w$-Wert von 385. Weiterhin wurde beobachtet, daß sich die Viskosität der Alkalisierlauge um ca. 21 % erhöht hatte. Die Bestimmung der Viskositäten der Alkalisierlauge erfolgte mit Hilfe von üblichen Kapillarviskosimetern.

Beispiel 6

Das Verfahren gemäß Beispiel 3 wurde wiederholt, jedoch zur Tauchlauge diesmal 0,1 g Maleinsäure/l zugegeben. Die erhaltene Viskose zeigte im Mittel einen $K_w$-Wert von 420, die Viskositätszunahme der Alkalisierlauge 18,5 %.

Beispiel 7

Wieder wurde gemäß Beispiel 3 Viskose hergestellt, bei der diesmal die Tauchlauge einen Zusatz von 0,05 g Propargylalkohol/Liter enthielt. Der mittlere $K_w$-Wert betrug 430, die Viskosität der Tauchlauge nahm um 17,5 % zu.

Beispiel 8

Das Beispiel 3 wurde wiederholt, jedoch 0,2 g des Natriumsalz der Dichloressigsäure pro Liter Alkalisierlauge zugegeben. Die Viskosität der Tauchlauge erhöhte sich dabei um 24 %, der $K_w$-Wert der Viskose ergab im Mittel 365.

Beispiel 9

Das Verfahren gemäß Beispiel 3 wurde erneut ausgeführt, diesmal jedoch unter Zusatz von 0,1 g/l Cyanurchlorid/Liter Alkalisierlauge. Die Viskosität dieser Alkalisierlauge war durch den Zusatz um 18 % erhöht worden. Die Viskose wies im Mittel einen $K_w$-Wert von 410 auf.

**Ansprüche**

1. Verfahren zur Herstellung von Viskose aus hemicellulosehaltigem Zellstoff durch Alkalisierung, Vorreife der erhaltenen Alkalicellulose, Sulfidierung und anschließendes Lösen zur Viskose, dadurch gekennzeichnet, daß die Hemicellulose bei der Alkalisierung nicht durch Dialyse entfernt sondern durch Zusatz einer im stark alkalischen Milieu und bei Temperaturen von 10 bis 60 °C mit den reaktiven OH-Gruppen der Hemicellulose blockierend und oder vernetzend reagieren den Substanz desaktiviert wird.

2. Verfahren nach Anspruch 1, dadurch gekennzeichnet, daß die blockierend und/oder vernetzend wirkende Substanz in einer Konzentration von 0,01 bis 5 g/l in der Alkalisierlauge enthalten ist.

3. Verfahren nach Anspruch 1 oder 2, dadurch gekennzeichnet, daß die vernetzend und/oder blockierend wirkende Substanz eine ungesättigte organische Verbindung mit aktivierter Doppelbindung oder Dreifachbindung, ein Sulfochlorid oder eine Verbindung mit einem reaktiven Halogenatom ist.

4. Verfahren nach Anspruch 3, dadurch gekennzeichnet, daß die Substanz mehrere aktivierte Doppelbindungen oder Halogenatome im Molekül aufweist.

## Claims

1. A process for the manufacture of viscose from hemicellulose containing cellulose pulp by steeping, aging of the alkali cellulose so obtained xanthation and subsequent dissolving to yield viscose, characterized in that the hemicellulose is not removed during the steeping step by dialysis but is deactivated by the addition of a substance which causes blocking and/or cross-linking of the reactive OH-groups of the hemicellulose in a strong alkaline medium and at temperatures of 10 to 60 °C.

2. The process as claimed in claim 1, characterized in that the steeping liquor contains from 0.01 to 5 g/l of a substance having a blocking and/or cross-linking effect on hemicellulose.

3. The process as claimed in claim 1 or 2, characterized in that the substance having a blocking and/or cross-linking effect is an unsaturated organic compound having an activated double or triple bond, a sulfochloride or a compound containing a reactive halogen atom.

4. The process as claimed in claim 3, characterized in that the substance contains several double bonds or halogen atoms in the molecule.

## Revendications

1. Procédé de préparation de viscose à partir de cellulose contenant de l'hémicellulose, par alcalinisation, prématuration de l'alcalicellulose formée, sulfuration, puis dissolution pour obtenir la viscose, procédé caractérisé en ce que, lors de l'alcalinisation, on n'élimine pas l'hémicellulose par dialyse, mais on la désactive en ajoutant une substance qui, en milieu fortement alcalin et à des températures de 10 à 60 °C, réagit avec les hydroxyles réactifs de l'hémicellulose en les bloquant et/ou en les réticulant.

2. Procédé selon la revendication 1, caractérisé en ce que l'on ajoute la substance bloquante et/ou réticulante à la lessive d'alcalinisation à une concentration de 0,01 à 5 g par litre.

3. Procédé selon la revendication 1 ou 2, caractérisé en ce que la substance réticulante et/ou bloquante est un composé organique insaturé avec une double liaison ou une triple liaison activée, un sulfochlorure ou un composé ayant un atome d'halogène réactif.

4. Procédé selon la révendication 3, caractérisé en ce que la molécule de la substance ajoutée comporte plusieurs doubles liaisons activées ou atomes d'halogènes.